# EUROPEAN PATENT APPLICATION

(11) **EP 2 882 218 A1**
(43) Date of publication of application: **10.06.2015**
(21) Application number: 13825132.7
(22) Date of filing: 12.06.2013
(51) Int. Cl.: H04W 24/10, H04W 16/32, H04W 72/04

(54) **COMMUNICATION SYSTEM, MACRO BASE STATION, MOBILE TERMINAL, AND COMMUNICATION METHOD**

(30) Priority: 31.07.2012 JP 2012170259
(71) Applicant: NTT DOCOMO, INC., Chiyoda-ku Tokyo 100-6150 (JP)
(72) Inventor: NAGATA, Satoshi, Tokyo 100-6150 (JP); KISHIYAMA, Yoshihisa, Tokyo 100-6150 (JP); TAKEDA, Kazuaki, Tokyo 100-6150 (JP); NAKAMURA, Takehiro, Tokyo 100-6150 (JP)
(74) Representative: Hoffmann Eitle
(86) International application number: PCT/JP2013/066154
(87) International publication number: WO 2014/020998

(57) **Abstract**

The present invention is designed to provide highly efficient small cell radio access. The communication system of the present invention has a macro station (30) that forms a macro cell, a plurality of local stations (20) that are connected with the macro station (30) via communication links and that form small cells in the macro cell, and a mobile station (10) that can communicate with a macro station (30) using a radio communication scheme for the macro cell, and that can communicate with each local station (20) using a radio communication scheme for the small cells, and the macro station (30) transmits, to the mobile station (10) or to the local stations (20), a first control signal that can indicate that a second measurement signal, which is different from a first measurement signal that is used between the macro station (30) and the mobile station (10), is transmitted.

## Description

### Technical Field

The present invention relates to a communication system, a macro base station apparatus, a mobile terminal apparatus and a communication method in a next-generation mobile communication system.

### Background Art

In a UMTS (Universal Mobile Telecommunications System) network, long-term evolution (LTE) is under study for the purposes of further increasing high-speed data rates, providing low delay, and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Successor systems of LTE (referred to as, for example, "LTE-advanced" or "LTE enhancement" (hereinafter referred to as "LTE-A")) are under study for the purpose of achieving further broadbandization and increased speed beyond LTE. In Rel-10, which is one variation of LTE-A, an agreement has been reached to employ carrier aggregation, whereby a plurality of component carriers (CCs), in which the system band of the LTE system is one unit, are grouped to achieve broadbandization. With LTE-A of Rel-10 and later versions, achieving increased capacity by means of a heterogeneous network (HetNet) configuration, in which many small cells are overlaid in a macro cell, is under study.

### Citation List

### Non-Patent Literature

Non-Patent Literature 1: 3GPP TR 25.913 "Requirements for Evolved UTRA and Evolved UTRAN"

### Summary of the Invention

### Technical Problem

Now, in cellular systems such as W-CDMA, LTE (Rel. 8) and successor systems of LTE (for example, Rel. 9 and Rel. 10), the radio communication schemes (radio interfaces) are designed to support macro cells. In addition to cellular environments such as these, it is expected that, in the future, high-speed wireless services by means of near-field communication such as ones provided indoors, in shopping malls and so on will be provided. Consequently, there is a demand to design a new radio communication scheme that is specially customized for small cells, so that it is possible to secure capacity with small cells while securing coverage with macro cells.

The present invention has been made in view of the above, and it is therefore an object of the present invention to provide a communication system, a macro base station apparatus, a mobile terminal apparatus and a communication method which can provide highly efficient small cell radio access.

### Solution to Problem

The communication system of the present invention is a communication system to have a macro base station apparatus that forms a macro cell, a plurality of local base station apparatuses that are connected with the macro base station apparatus via a communication link and that form small cells in the macro cell, and a mobile terminal apparatus that can communicate with the macro base station apparatus using a radio communication scheme for the macro cell, and that can communicate with each local base station apparatus using a radio communication scheme for the small cells, and, in this communication system, the macro base station apparatus transmits, to the mobile terminal apparatus or to the local base station apparatuses, a first control signal that can indicate that a second measurement signal, which is different from a first measurement signal that is used between the macro base station apparatus and the mobile terminal apparatus, is transmitted.

### Technical advantage of the Invention

According to the present invention, it is possible to provide highly efficient small cell radio access that is specially customized for small cells.

### Brief Description of the Drawings

FIG. 1 is a diagram to show a configuration to place many small cells in a macro cell;
FIG. 2A is a HetNet configuration diagram, in which a macro cell and small cells are operated using the same carrier, and FIG. 2B is a HetNet configuration diagram, in which a macro cell and small cells are operated using different carriers;
FIG. 3 provides conceptual diagrams to show examples of reporting of control information and feedback of measurement results in a communication system according to the present invention;
FIG. 4 is a diagram to explain a system configuration of a radio communication system;
FIG. 5 is a diagram to show an overall configuration of a mobile terminal apparatus;
FIG. 6 is a diagram to show an overall configuration of a macro base station apparatus; and
FIG. 7 is a diagram show an overall configuration of a local area base station apparatus.

### Description of Embodiments

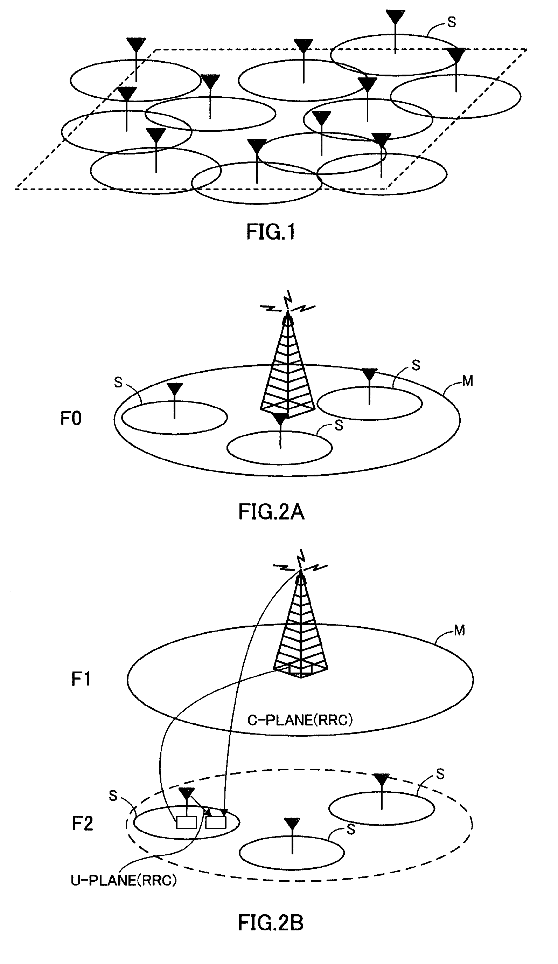

As shown in FIG. 1, although, in a heterogeneous network configuration, many small cells are placed in a macro cell area, when many small cells S are placed in a macro cell area, it is necessary to design the small cells S taking into account capacity versus network costs. Network costs may include, for example, the cost of installing network nodes, backhaul links and so on, the operation cost for cell planning and maintenance support, the power consumption on the network side, and so on. As a demand apart from capacity, small cells S are required to support saved power consumption on the mobile terminal apparatus side, random cell planning, and so on.

The present invention is applicable to the two kinds of heterogeneous networks shown in FIGs. 2A, and 2B. In the HetNet configuration shown in FIG. 2A, the macro cell M and the small cells S are operated using the same carrier (frequency F0). In the 3GPP, inter-cell interference control (eICIC: enhanced Inter-Cell Interference Coordination) techniques in HetNet have been under study. As a result of this, eICIC in the time domain has been agreed upon. Interference coordination in the time domain (in subframe units) is also applicable to single-carrier communication as well. Interference is reduced by using almost-blank subframes (subframes that do not transmit data) or MBSFN (multimedia broadcast multicast service over single-frequency network) subframes as non-transmission periods.

In the HetNet configuration shown in FIG. 2B, the macro cell M and the small cells S are operated using different frequencies (F1 and F2). To operate the macro cell M and the small cells S with different frequencies (F1 and F2), carrier aggregation defined in LTE-A may be used. In Rel-10, carrier aggregation to group a plurality of component carriers (CCs) for broadbandization, where the system band of the conventional system (LTE) is one unit, is defined. The HetNet configuration shown in FIG. 2B represents a concept to adopt a radio interface (NCT: New Carrier Type) that has no conventional concept of cell IDs and that is specially customized for user data transmission, in small cells S. The HetNet configuration shown in FIG. 2B supports C (Control)-plane to transmit control signals and U (User)-plane to transmit user data, separately, between the macro cell M and the small cells S. In particular, by operating the macro cell M in a conventional LTE frequency band (for example, the 2 GHz band) and the small cells S in a frequency band (for example, the 3.5 GHz band) that is higher than that of the macro cell M, it is possible to maintain high connectivity against the mobility of mobile stations (UE: User Equipment), and, by using a wide bandwidth, realize high-speed communication that does not produce interference between the macro cells and the small cells. Furthermore, by employing NCT, which removes cell-specific signals (CRSs and so on), many advantages are achieved, such as simplified cell planning, energy saving, flexible application of CoMP (Coordinated Multi-Point) techniques and so on. The macro cell M supports C-plane and U-plane together, and achieves transmission quality even with UEs without nearby small cells.

Now, referring to the HetNet configuration shown in FIG. 2B, there may be differences in requirements and configurations between the macro cell and the small cells. The macro cells have a limited bandwidth, and therefore spectral efficiency is very important. By contrast with this, the small cells can take up a wide bandwidth easily, so that, as long as a wide bandwidth is secured, the importance of spectral efficiency is not as high as it is for the macro cell. While the macro cell needs to support high mobility such as typified by cars, the small cells have only to support low mobility. The macro cell needs to secure a wide coverage. Although the small cells should preferably secure a wide coverage as well, the macro cell can cover up the shortage of coverage.

Although, in the macro cell, there is a significant power difference between the uplink and the downlink and the uplink and the downlink are asymmetrical, in the small cells, there is little power difference between the uplink and the downlink and the uplink and the downlink are made nearly symmetrical. In the macro cell, the number of connecting users per cell is large, and, furthermore, cell planning is executed, so that there is little variation of traffic. In the small cells, the number of connecting users per cell is low, and, furthermore, cell planning may not be executed, and therefore traffic varies significantly. In this way, the optimal requirements for the small cells are different from those of the macro cell, and therefore there is a need to design a radio communication scheme that is specially customized for small cells.

Considering interference that arises from saved power consumption and random cell planning, it is preferable to configure the radio communication scheme for small cells to assume non-transmission while there is no traffic. Consequently, the radio communication scheme for small cells may be designed as UE-specific as possible. Consequently, the radio communication scheme for small cells may be designed based on EPDCCHs (Enhanced Physical Downlink Control Channels) and DM-RSs (Demodulation - Reference Signals), without using the PSS/SSS (Primary Synchronization Signal/Secondary Synchronization Signal), CRSs (Cell-specific Reference Signals) and the PDCCH (Physical Downlink Control Channel) in LTE.

An EPDCCH refers to a predetermined frequency band in the PDSCH region (data signal region) that is used as a PDCCH region (control signal region). EPDCCHs that are allocated to the PDSCH region are demodulated using DM-RSs. An EPDCCH may be referred to as an "FDM-type PDCCH" or may be referred to as a "UE-PDCCH." Although a new carrier frequency that is different from conventional carrier frequencies is used using the radio communication scheme for small cells, this new carrier frequency may be referred to as an "additional carrier," or may be referred to as an "extension carrier."

With the radio communication scheme for small cells, measurement signals that are different from conventional measurement signals (Rel-8/9/10/11LTE) are under study. Even when such new measurement signals are defined, conventional measurement signals are still used in the system, so that both new measurement signals and conventional measurement signals exist in the system. In an environment like this, it is necessary to efficiently report the use of new measurement signals to mobile stations and base stations that form small cells.

The present inventors have focused on technical problems as to how measurement signals (reference signals) should be measured and how measurement reports should be reported to the network side (macro base station or local base stations) when both new measurement signals and conventional measurement signals exist in a network configuration in which there are many small cells as access candidates for a mobile station, and arrived at the present invention.

That is, a gist of the present invention is that, in a communication system including a macro base station apparatus that forms a macro cell, a plurality of local base station apparatuses that are connected with this macro base station apparatus via communication links and that form small cells in the macro cell, and a mobile terminal apparatus that can communicate with the macro base station apparatus using a radio communication scheme for the macro cell, and that can communicate with each local base station apparatus using a radio communication scheme for the small cells, the macro base station apparatus transmits, to the mobile terminal apparatus or to the local base station apparatuses, a control signal that can indicate that a second measurement signal, which is different from the first measurement signal that is used between the macro base station apparatus and the mobile terminal apparatus, is transmitted, thereby reporting the use of a new measurement signal to the mobile terminal apparatus, and realizing highly efficient small cell radio access that is specially customized for small cells.

The first measurement signals (conventional measurement signals) to be used between the macro base station apparatus and the mobile station may include, for example, RSRP, RSRQ, RSSI, CQI, PMI, RI and/or the like. The synchronization signals to be used in cell search herein are also included in the first measurement signals. The second measurement signals refer to reference signals transmitted from the small cell base station apparatuses, and may include, for example, signals combining the following signals:
- the synchronization signals of Rel-8 LTE
- signals that use the same sequences as or different sequences from the Rel-8 LTE synchronization signals and that are multiplexed in different positions along the time/frequency/space direction
- signals in which the primary synchronization signal and the secondary synchronization signal are multiplexed in different slots
- DISCOVERY SIGNALS for small cells (reference signals transmitted from small cell base station apparatuses) (for example, signals having a long transmission cycle or signals having a large amount of radio resources per transmission unit compared to the Rel-8 LTE synchronization signals)
- conventional reference signals (CSI-RS, CRS, DM-RS, PRS, SRS) or part of these radio resources (for example, a signal that transmits the CRS of one port in a 5-msec cycle)
Note that the DISCOVERY SIGNAL may be referred to as, for example, the PDCH (Physical Discovery Channel), the BS (Beacon Signal) and the DPS (Discovery Pilot Signal). A base station apparatus that constitutes a macro cell will be referred to as a "macro station," and a base station apparatus that constitutes a small cell will be referred to as a "local station."

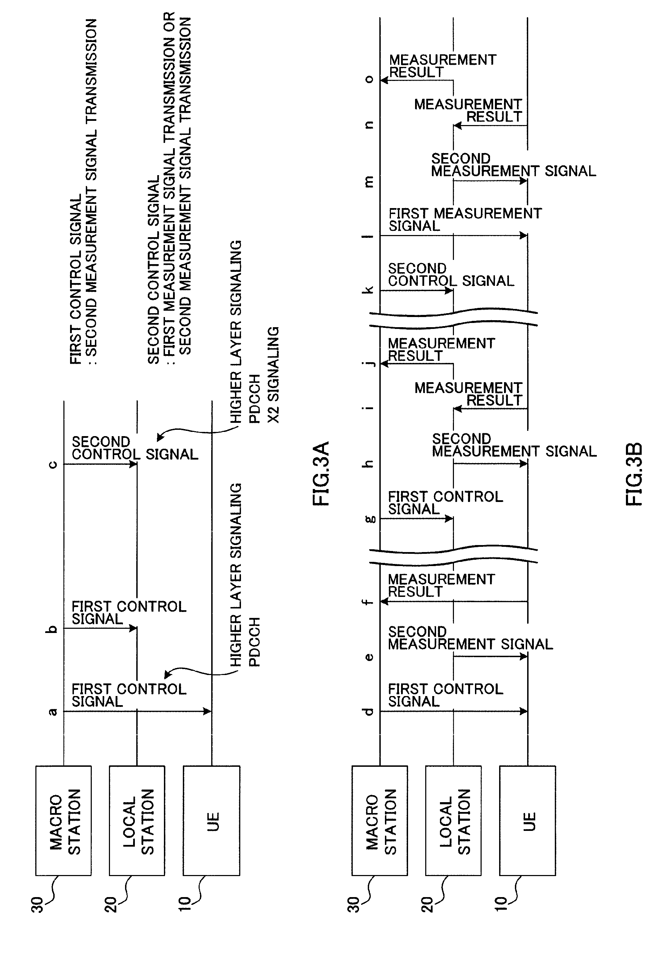

In the communication system of the present invention, as for the method of reporting, to a mobile station or to local stations, a control signal that can indicate that a second measurement signal, which is different from the first measurement signal that is used between the macro base station apparatus and the mobile station, is transmitted, there are the following two methods. These reporting methods will be described using FIG. 3.

### (First reporting method)

The first reporting method is a method to report control signals to a mobile station. According to the first reporting method, a control signal (first control signal) that can indicate that a second measurement signal, which is different from the first measurement signal (conventional measurement signal) that is used between a macro station 30 and a mobile station (UE) 10, is transmitted, is reported from the macro station 30 to the mobile station 10 (transmission "a" in FIG. 3A). This control signal may be reported semi-statically by using higher layer signaling such as RRC signaling, broadcast signals and so on, or may be reported dynamically using the PDCCH signal (downlink control information) and so on.

According to the first reporting method, when transmission is carried out from local stations 20 to the mobile station 10, the macro station 30 may transmit, in advance, a control signal (first control signal) that can indicate that a second measurement signal, which is different from a first measurement signal (conventional measurement signal), is transmitted, to the local stations 20 (transmission "b" in FIG. 3A), or, in the small areas, setting may be provided in advance so that the second measurement signal is transmitted.

### (Second reporting method)

The second reporting method is a method to report control signals to the local stations 20. According to the second reporting method, the macro station 30 transmits, in advance, a control signal (second control signal) that can indicate that a first measurement signal is transmitted or that a second measurement signal is transmitted, to the local stations 20

(transmission "c" in FIG. 3A). This control signal may be reported semi-statically by using higher layer signaling such as RRC signaling, broadcast signals and so on, or may be reported dynamically using the PDCCH signal (downlink control information) and so on. This control signal may be reported using signaling between base stations, such as X2 signaling.

By employing these reporting methods, the local stations 20 can conduct a measurement using a second measurement signal and feed back the measurement result when necessary, so that it is possible to realize highly efficient small cell radio access that is specially customized for small cells.

In the communication system of the present invention, as for the method of feeding back the measurement results (measurement reports) of conducting measurements in the mobile station 10 by using measurement signals, there are the following two methods:

### (First feedback method)

According to the first feedback method, the mobile station 10 feeds back the measurement results of conducting measurements using measurement signals, based on control signals reported from the base stations (macro station 30 and local stations 20). This feedback may be sent directly to the macro station 30, may be sent to the macro station 30 via the local stations 20, or may be sent to the local stations 20.

Similar to the above first reporting method, when a control signal (first control signal) that can indicate that a second measurement signal, which is different from a first measurement signal (conventional measurement signal), is transmitted, is reported (transmission "d" in FIG. 3B), the mobile station 10 receives the second measurement signal from the local stations 20 (transmission "e" in FIG. 3B) and feeds back the measurement result of conducting a measurement using the second measurement signal, to the macro station 30 (transmission "f" in FIG. 3B). For example, when a control signal to indicate that a local area DISCOVERY SIGNAL is transmitted is reported, the mobile station 10 feeds back the measurement result derived by using the local area

### DISCOVERY SIGNAL.

When transmission is carried out from the local stations 20 to the mobile station 10, the macro station 30 transmits, in advance, a control signal (first control signal) that can indicate that a second measurement signal, which is different from a first measurement signal, is transmitted, to the local stations 20 (transmission "g" in FIG. 3B), and the mobile station 10 receives the second measurement signal from the local stations 20 (transmission "h" in FIG. 3B), and feeds back the measurement results of conducting a measurement by using the second measurement signal, to the macro station 30, via the local stations 20 (transmission "i" and transmission "j" in FIG. 3B). Note that the measurement result of conducting a measurement by using the second measurement signal may be fed back directly from the mobile station 10 to the macro station 30.

### (Second feedback method)

According to the second feedback method, the mobile station 10 performs blind detection of second measurement signals and estimates the transmission of a second measurement signal, and, upon successful blind detection, feeds back the measurement result of conducting a measurement by using the second measurement signal. According to the second feedback method, a control signal that can identify measurement signals does not have to be transmitted, so that it is possible to reduce the overhead of communication. Note that the second feedback method can be applied effectively in the event the second reporting method is used.

For example, the macro station 30 transmits, in advance, a control signal (second control signal) that can indicate that a first measurement signals or a second measurement signal is transmitted, to the local stations 20 (transmission "k" in FIG. 3B), and the mobile station 10 receives the first measurement signal from the macro station 30 (transmission "1" in FIG. 3B), receives the second measurement signal from the local stations 20 (transmission "m" in FIG. 3B), and feeds back the measurement result of conducting a measurement by using the first measurement signal and the measurement result of conducting a measurement by using the second measurement signal, to the macro station 30, via the local stations 20 (transmission "n" and transmission "o" in FIG. 3B). Note that the measurement result of conducting a measurement by using the first measurement signal and the measurement result of conducting a measurement by using the second measurement signal may be directly fed back from the mobile station 10 to the macro station 30.

With the first and second feedback methods, the mobile station 10 may feed back the measurement result of conducting a measurement by using a first measurement signal and the measurement result of conducting a measurement by using a second measurement signal. In this case, it is also possible to transmit only the measurement result of the better quality between the measurement result of the measurement using the first measurement signal and the measurement result of the measurement using the second measurement signal. By this means, it is possible to feed back a measurement result of higher quality. When the measurement result of the measurement using the first measurement signal and the measurement result of the measurement using the second measurement signal are fed back, identification information as to from which measurement signal each measurement result is derived, is also fed back. This identification information may be fed back apart from the measurement results or may be fed back together with the measurement results.

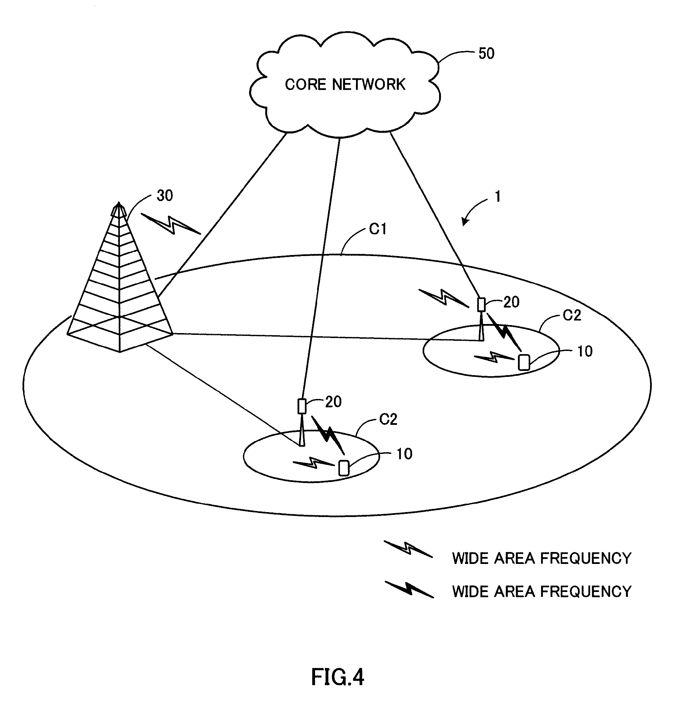

The radio communication system according to the present embodiment will be described below in detail. FIG. 4 is a diagram to explain a system configuration of a radio communication system according to the present embodiment. The radio communication system shown in FIG. 4 is a communication system in which a macro station that forms a macro cell, a plurality of local stations that are connected with the macro station via communication links and that form small cells in the macro cell, and a mobile station that can communicate with the macro station using a radio communication scheme for the macro cell and that can communicate with each local stations using a radio communication scheme for the small cells.

The radio communication system shown in FIG. 4 is a system to accommodate, for example, the LTE system or SUPER 3G. This radio communication system supports carrier aggregation, whereby a plurality of fundamental frequency blocks are grouped into one, using the system band of the LTE system as one unit. This radio communication system may be referred to as "IMT-Advanced," "4G," or "FRA (Future Radio Access)" and so on.

As shown in FIG. 4, the radio communication system 1 has a macro station 30 that covers a macro cell C1, and a plurality of local stations 20 that cover a plurality of small cells C2 that are provided in the macro cell C1. Many mobile stations 10 are placed in the macro cell C1 and in each small cell C2. The mobile stations 10 support the radio communication schemes for the macro cell and the small cells, and are configured to be able to perform radio communication with the macro station 30 and the local stations 20.

Communication between the mobile stations 10 and the macro station 30 is conducted using a macro cell frequency (for example, a low frequency band). Communication between the mobile stations 10 and the local stations 20 is carried out using a small cell frequency (for example, a high frequency band). The macro station 30 and each local station 20 are connected with each other by wire connection or by wireless connection.

The macro station 30 and each local station 20 are each connected with a higher station apparatus, which is not illustrated, and are connected to a core network 50 via the higher station apparatus. Note that the higher station apparatus may be, for example, an access gateway apparatus, a radio network controller (RNC), a mobility management entity (MME) and so on, but is by no means limited to these. The local stations 20 may be connected with the higher station apparatus via the macro station 30.

Although each mobile station 10 may be either an LTE terminal or an LTE-A terminal, the following description will be given simply with respect to "mobile station 10," unless specified otherwise. Although the mobile station 10 will be described to perform radio communication with the macro station 30 and the local stations 20 for ease of explanation, more generally, user equipment (UE), which may cover both mobile stations and fixed terminal apparatuses, may be used as well. The local stations 20 and the macro station 30 may be referred to as transmission points for the macro cell and the small cells. The local stations 20 may be optical remote base station apparatuses.

In the radio communication system, as radio access schemes, OFDMA (Orthogonal Frequency Division Multiple Access) is applied to the downlink, and SC-FDMA (Single-Carrier Frequency-Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing, per terminal, the system band into bands formed with one resource block or continuous resource blocks, and allowing a plurality of terminals to use mutually different bands.

Now, communication channels in the LTE system will be described. Downlink communication channels include a PDSCH (Physical Downlink Shared Channel), which is used by each mobile station 10 on a shared basis, and downlink L1/L2 control channels (PDCCH, PCFICH, PHICH). User data and higher control information are transmitted by the PDSCH. Scheduling information for the PDSCH and the PUSCH and so on are transmitted by the PDCCH (Physical Downlink Control CHannel). The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator CHannel).

Uplink communication channels include a PUSCH (Physical Uplink Shared Channel), which is used by each mobile station 10 on a shared basis as an uplink data channel, and a PUCCH (Physical Uplink Control Channel), which is an uplink control channel. User data and higher control information are transmitted by this PUSCH. Downlink radio quality information (CQI: Channel Quality Indicator), ACK/NACK and so on are transmitted by the PUCCH.

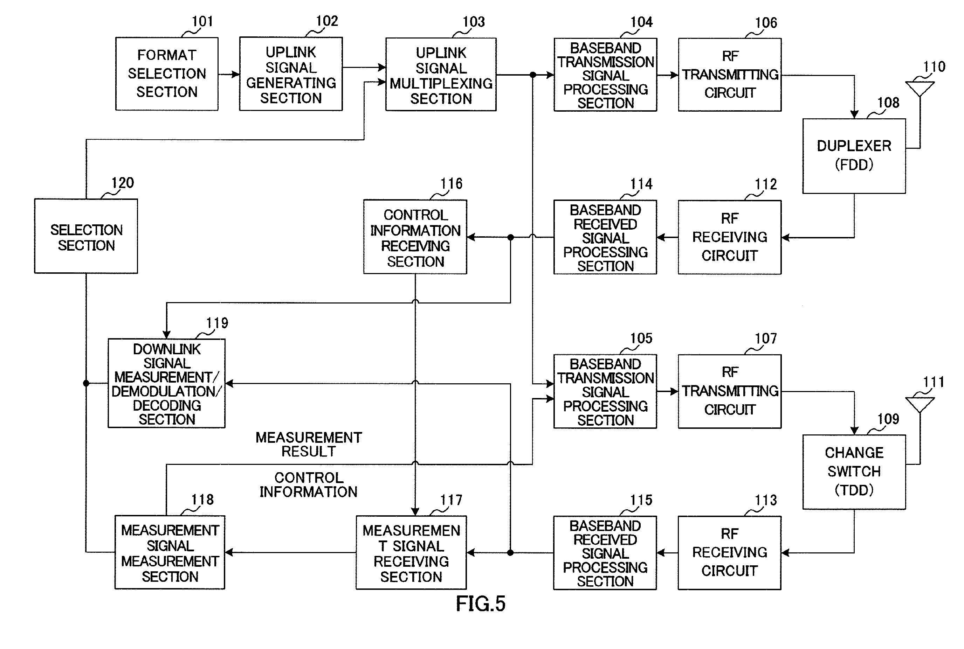

An overall configuration of the mobile station 10 will be described with reference to FIG. 5. The mobile station 10 has, as processing sections of the transmitting sequence, a format selection section 101, an uplink signal generating section 102, an uplink signal multiplexing section 103, baseband transmission signal processing sections 104 and 105, and RF transmitting circuits 106 and 107. The mobile station 10 receives a first control signal, that can indicate that a second measurement signal, which is different from the a first measurement signal that is used between the macro station 30 and the mobile station 10, is transmitted, and the second measurement signal, and acquires a measurement result by conducting a measurement using the second measurement signal, and transmits this measurement result to the macro station 30 or to the local stations 20. The mobile station 10 receives the first measurement signal, acquires a measurement result by conducting a measurement using the first measurement signal, and transmits the measurement result of the measurement using the first measurement signal and the measurement result of the measurement using the second measurement signal, to the macro station 30 or to the local stations 20.

The format selection section 101 selects the transmission format for the macro cell and the transmission format for the small cells. The uplink signal generating section 102 generates uplink data signals and reference signals. In the event of the transmission format for the macro cell, the uplink signal generating section 102 generates the uplink data signal and reference signals for the macro station 30. In the event of the transmission format for the small cells, the uplink signal generating section 102 generates the uplink data signals and reference signals for the local stations 20.

The uplink signal multiplexing section 103 multiplexes uplink transmission data and uplink reference signals as an uplink signal. The uplink signal multiplexing section 103 multiplexes the measurement result (MEASUREMENT report) of the first measurement signal, which is a conventional measurement signal, and/or the measurement result (MEASUREMENT report) of the second measurement signal, which is a new measurement signal, with other uplink signals, as an uplink signal. When the macro station 30 is the recipient of feedback, the uplink signal multiplexing section 103 outputs the multiplexed uplink signals to the baseband transmission signal processing section 104. The uplink signals for the macro station 30 are input in the baseband transmission signal processing section 104, and subjected to digital signal processing. For example, in the event these are uplink signals of the OFDM scheme, the signals are converted from frequency domain signals into time sequence signals through an inverse fast Fourier transform (IFFT), and have cyclic prefixes inserted therein. Then, the uplink signals pass the RF transmitting circuit 106, and are transmitted from a transmitting/receiving antenna 110 for the macro cell, via a duplexer 108 that is provided between the transmitting sequence and the receiving sequence. In the transmitting/receiving sequences for the macro cell, simultaneous transmission/reception is made possible by the duplexer 108.

When the local stations 20 are the recipients of feedback, the uplink signal multiplexing section 103 outputs the multiplexed uplink signals to the baseband transmission signal processing section 105. The uplink signals for the local stations 20 are input in the baseband transmission signal processing section 105, and subjected to digital signal processing. For example, in the event these are uplink signals of the OFDM scheme, the signals are converted from frequency domain signals to time sequence signals through an inverse fast Fourier transform (IFFT), and have cyclic prefixes inserted therein. Then, the uplink signals pass the RF transmitting circuit 107, and are transmitted from a transmitting/receiving antenna 111 for the macro cell, via a change switch 109 that is provided between the transmitting sequence and the receiving sequence. In the transmitting/receiving sequences for the small cells, transmission and reception are switched by the change switch 109.

Although the present embodiment is configured so that the duplexer 108 is provided in the transmission/reception sequences for the macro cell and the change switch 109 is provided in the transmission/reception sequences for the small cells, this configuration is by no means limiting. It is equally possible to provide the change switch 109 in the transmission/reception sequences for the macro cell, or provide the duplexer 108 in the transmission/reception sequences for the small cells. Uplink signals for the macro cell and the small cells may be transmitted simultaneously from the transmitting/receiving antennas 110 and 111, or may be transmitted separately by switching between the transmitting/receiving antennas 110 and 111.

The mobile station 10 has, as processing sections of the receiving sequence, RF receiving circuits 112 and 113, baseband received signal processing sections 114 and 115, a control information receiving section 116, a DISCOVERY SIGNAL receiving section 117, a DISCOVERY SIGNAL measurement section 118, and downlink signal measurement/demodulation/decoding sections 119 and 120.

A downlink signal from the macro station 30 is received in the transmitting/receiving antenna 110 for the macro cell. This downlink signal is input in the baseband received signal processing section 114 via the duplexer 108 and the RF receiving circuit 112, and subjected to digital signal processing. For example, in the event this is a downlink signal of the OFDM scheme, the cyclic prefixes are removed, and the signal is converted from a time sequence signal to a frequency domain signal through a fast Fourier transform (FFT).

The control information receiving section 116 receives a control signal (first control signal) that can indicate that a second measurement signal, which is different from the first measurement signal (conventional measurement signal) that is used between the macro station 30 and the mobile station 10, is transmitted. The control information receiving section 116 outputs the control information included in the control signal to the MEASUREMENT signal receiving section 117.

When the transmission of a second measurement signal is identified in the control information from the control information receiving section 116, the MEASUREMENT signal receiving section 117 receives the second measurement signal from the baseband received signal processing section 115. The MEASUREMENT signal receiving section 117 outputs the second measurement signal to the MEASUREMENT signal measurement section 118.

The MEASUREMENT signal measurement section 118 conducts a MEASUREMENT using the second measurement signal. The MEASUREMENT signal measurement section 118 outputs the measurement result to the uplink signal multiplexing section 103. Then, this measurement result is fed back to the local stations 20 or to the macro station 30, via the baseband transmission signal processing section 104, the RF transmitting circuit 106 and the duplexer 108.

The downlink data signal of the macro cell and the downlink data signal of the small cell are output to the downlink signal measurement/demodulation/decoding section 119, and decoded (descrambled) and demodulated in the downlink signal measurement/demodulation/decoding section 119. At this time, in the downlink signal measurement/demodulation/decoding section 119, a MEASUREMENT is conducted using at least the first measurement signal (conventional measurement signal) that is used between the macro station 30 and the mobile station 10. The downlink signal measurement/demodulation/decoding section 119 outputs the measurement result to the uplink signal multiplexing section 103. Then, this measurement result is output to the local stations 20 or to the macro station 30 via the baseband transmission signal processing section 104, the RF transmitting circuit 106 and the duplexer 108.

When a first measurement signal and a second measurement signal are received together, the downlink signal measurement/demodulation/decoding section 119 conducts a MEASUREMENT using the first measurement signal and outputs the measurement result to the selection section 120, and the MEASUREMENT signal measurement section 118 conducts a MEASUREMENT using the second measurement signal and outputs the measurement result to the selection section 120. The selection section 120 may compare the measurement result using the first measurement signal and the measurement result using the second measurement signal, and outputs only the measurement result of the higher quality to the local stations 20 or to the macro station 30 via the baseband transmission signal processing section 104, the RF transmitting circuit 106 and the duplexer 108.

The mobile station 10 may estimate the transmission of a second measurement signal by performing blind detection of second measurement signals in the downlink signal measurement/demodulation/decoding section 119, and, upon successful blind detection, feed back the measurement result of conducting a measurement by using the second measurement signal.

The above control signal is received by way of, for example, higher layer signaling such as broadcast information and RRC signaling, the PDCCH (downlink control information) and so on.

Downlink signals from the local stations 20 are received in the transmitting/receiving antenna 111 for the small cells. The downlink signals are input in the baseband received signal processing section 115 via the change switch 109 and the RF receiving circuit 113, and subjected to digital signal processing. For example, in the event these are downlink signals of the OFDM scheme, the cyclic prefixes are removed, and the signals are converted from time sequence signals to frequency domain signals through a fast Fourier transform (FFT).

Downlink signals of the macro cell and the small cells may be received simultaneously from the transmitting/receiving antennas 110 and 111, or may be received separately by switching between the transmitting/receiving antennas 110 and 111.

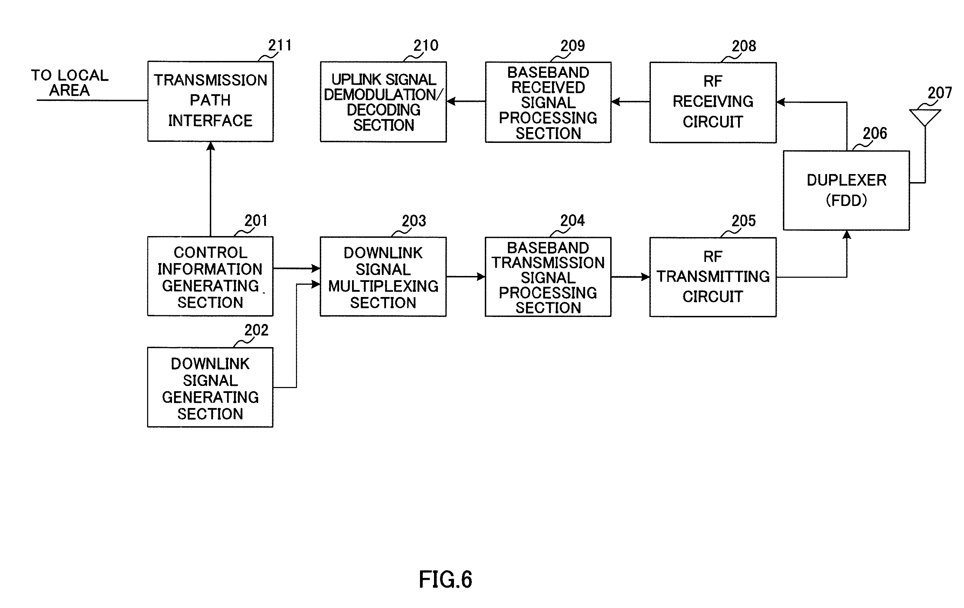

An overall configuration of the macro station 30 will be described with reference to FIG. 6. The macro station 30 has, as processing sections of the transmitting sequence, a control information generating section 201, a downlink signal generating section 202, a downlink signal multiplexing section 203, a baseband transmission signal processing section 204, and an RF transmitting circuit 205. The macro station 30 transmits the first control signal that can indicate that a second measurement signal, which is different from the first measurement signal that is used between the macro station 30 and the mobile station 10, is transmitted, to the mobile station 10 or to the local stations 20. The macro station 30 transmits a second control signal that can indicate that a first measurement signal or a second measurement signal is transmitted, to the local stations 20.

The control information generating section 201 generates, as macro cell control information, the control signal (first control signal) that can indicate that a second measurement signal, which is different from the first measurement signal (conventional measurement signal) that is used between the macro station 30 and the mobile station 10, is transmitted, and/or the control signal (second control signal) that can indicate that a first measurement signal or a second measurement signal is transmitted. The control information generating section 201 outputs the control signals to the transmission path interface 211 and to the local stations 20, and also to the downlink signal multiplexing section 203. The control information generating section 201 outputs the first control signal to the downlink signal multiplexing section 203, and outputs the second control signal to the local stations 20.

The first control signal is transmitted to the mobile station 10 via the downlink signal multiplexing section 203, the baseband transmission signal processing section 204, the RF transmitting circuit 205 and the duplexer 206. The second control signal may use higher layer signaling such as RRC signaling and broadcast signals, may use the PDCCH signal (downlink control information) and so on, or may use signaling between base stations such as X2 signaling. When the PDCCH signal (downlink control information) and so on are used, the second control signal is transmitted to the mobile station 10 via the downlink signal multiplexing section 203, the baseband transmission signal processing section 204, the RF transmitting circuit 205 and the duplexer 206.

The downlink signal generating section 202 generates downlink data signals and reference signals. The downlink signal multiplexing section 203 multiplexes macro cell control information, and the downlink data signals and downlink reference signals as a macro cell downlink signal. A macro cell downlink signal for the mobile station 10 is input in the baseband transmission signal processing section 204, and subjected to digital signal processing. For example, in the event this is a downlink signal of the OFDM scheme, the signal is converted from a frequency domain signal to a time sequence signal through an inverse fast Fourier transform (IFFT), and has cyclic prefixes inserted therein. Then, the downlink signal passes the RF transmitting circuit 205, and is transmitted from the transmitting/receiving antenna 207 via a duplexer 206 that is provided between the transmitting sequence and the receiving sequence.

The macro station 30 has, as processing sections of the receiving sequence, an RF receiving circuit 208, a baseband received signal processing section 209 and an uplink signal demodulation/decoding section 210.

An uplink signal from the mobile station 10 is received in the transmitting/receiving antenna 207, and input in the baseband received signal processing section 209 via the duplexer 206 and the RF receiving circuit 208. In the baseband received signal processing section 209, the uplink signal is subjected to digital signal processing. For example, in the event this is an uplink signal of the OFDM scheme, the cyclic prefixes are removed, and the signal is converted from a time sequence signal to a frequency domain signal through a fast Fourier transform (FFT). The uplink data signal is input in the uplink signal demodulation/decoding section 210, and decoded (descrambled) and demodulated in the uplink signal demodulation/decoding section 210. The uplink signal includes MEASUREMENT reports (measurement results).

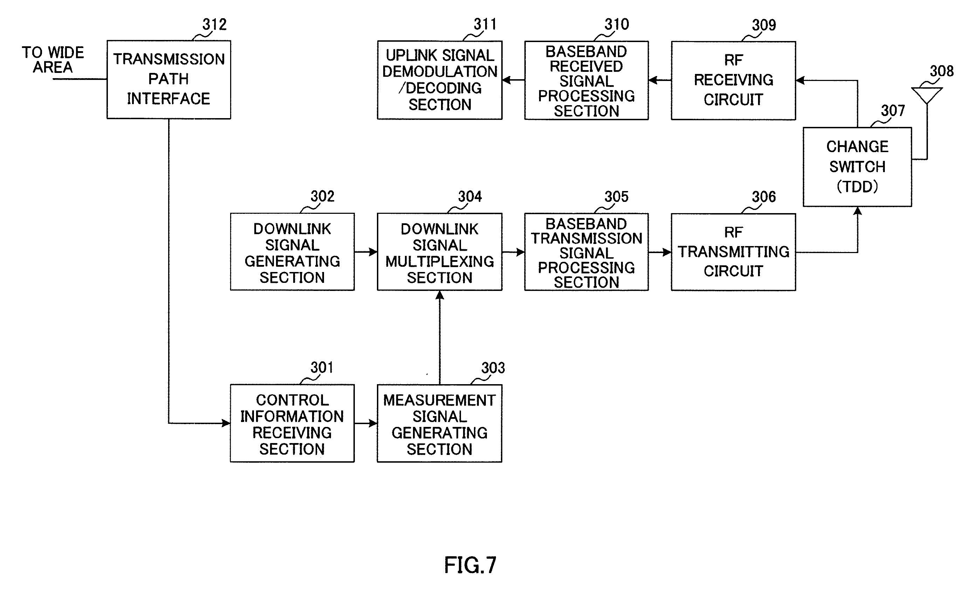

An overall configuration of the local stations 20 will be described with reference to FIG. 7. Assume that the local stations 20 are arranged very close to the mobile station 10. The local stations 20 have a control information receiving section 301. The local stations 20 have, as processing sections of the transmitting sequence, a downlink signal generating section 302, a MEASUREMENT signal generating section 303, a downlink signal multiplexing section 304, a baseband transmission signal processing section 305, and a RF transmitting circuit 306.

The control information receiving section 301 receives macro cell control information from the macro station 30 via the transmission path interface 312. Here, the second control signal is received as the macro cell control information. The control information receiving section 301 outputs the control signal to the MEASUREMENT signal generating section 303.

The downlink signal generating section 302 generates a downlink data signal (PDSCH), a downlink reference signal, and a downlink control signal (EPDCCH). The MEASUREMENT signal generating section 303 generates the second measurement signal based on the control signal output from the control information receiving section 301.

The downlink signal multiplexing section 304 multiplexes the downlink transmission data, the downlink reference signal, and the downlink control signal. A downlink signal for the mobile station 10, including the second measurement signal, is output to the baseband transmission signal processing section 305, and subjected to digital signal processing. For example, in the event this is a downlink signal of the OFDM scheme, the signal is converted from a frequency domain signal to a time sequence signal through an inverse fast Fourier transform (IFFT), and has cyclic prefixes inserted therein. Then, the downlink signal passes the RF transmitting circuit 306, and is transmitted from a transmitting/receiving antenna 308 via the change switch 307 that is provided between the transmitting sequence and the receiving sequence. Note that a duplexer may be provided instead of the change switch 307.

The local stations 20 have, as processing sections of the receiving sequence, an RF receiving circuit 309, a baseband received signal processing section 310, and an uplink signal demodulation/decoding section 311.

Uplink signals for the small cells from the mobile station 10 are received in the transmitting/receiving antenna 308 for the small cells, and input in the baseband received signal processing section 310 via the change switch 307 and the RF receiving circuit 309. In the baseband received signal processing section 310, the uplink signals are subjected to digital signal processing. For example, in the event these are uplink signals of the OFDM scheme, the cyclic prefixes are removed, and the signals are converted from time sequence signals to frequency domain signals through a fast Fourier transform (FFT). The uplink data signal is input in the uplink signal demodulation/decoding section 311, and decoded (descrambled) and demodulated in the uplink signal demodulation/decoding section 311. When the mobile station 10 reports MEASUREMENT reports to the local stations 20, the measurement result of the first measurement signal and/or the measurement result of the second measurement signal is decoded from the uplink signals.

The local stations 20 transmit the measurement result of the first measurement signal and/or the measurement result of the second measurement signal to the macro station 30 when necessary.

As described above, with the radio communication system 1 according to the present embodiment, the macro station 30 transmits, to the mobile station 10, the first control signal that can indicate that a second measurement signal, which is different from the first measurement signal that is used between the macro station 30 and the mobile station 10, is transmitted, and the mobile station 10 receives the first control signal and the second measurement signal, conducts a measurement using the second measurement signal and acquires the measurement result, and transmits the measurement result to the macro station 30 or to the local stations 20, so that it is possible to report the use of a new measurement signal to the mobile station 10, and realize highly efficient small cell radio access that is specially customized for small cells.

The present invention is by no means limited to the above embodiment and can be implemented in various modifications. For example, it is possible to adequately change the signaling method, the number of processing sections, the order of processes and so on in the above description, without departing from the scope of the present invention, and implement the present invention. Besides, the present invention can be implemented with various changes, without departing from the scope of the present invention.

The disclosure of Japanese Patent Application No. 2012-170259, filed on July 31, 2012, including the specifications, drawings, and abstracts, are incorporated herein by reference in their entirety.

## Claims

1. A communication system comprising a macro base station apparatus that forms a macro cell, a plurality of local base station apparatuses that are connected with the macro base station apparatus via a communication link and that form small cells in the macro cell, and a mobile terminal apparatus that can communicate with the macro base station apparatus using a radio communication scheme for the macro cell, and that can communicate with each local base station apparatus using a radio communication scheme for the small cells,
wherein the macro base station apparatus transmits, to the mobile terminal apparatus or to the local base station apparatuses, a first control signal that can indicate that a second measurement signal, which is different from a first measurement signal that is used between the macro base station apparatus and the mobile terminal apparatus, is transmitted.

2. The communication system according to claim 1, wherein the macro base station apparatus transmits, to the local base station apparatuses, a second control signal that can indicate that the first measurement signal is transmitted or that the second measurement signal is transmitted.

3. The communication system according to claim 1, wherein the second measurement signal is a reference signal that is transmitted from the small cell base station apparatuses.

4. The communication system according to claim 1, wherein the first control signal and/or the second control signal is transmitted by higher layer signaling, by signaling between base stations, or by a downlink control signal.

5. A macro base station apparatus that is connected with a plurality of local base station apparatuses that form small cells in a macro cell via a communication link, and that can communicate with a mobile terminal apparatus using a radio communication scheme for the macro cell,
wherein the macro base station apparatus transmits, to the mobile terminal apparatus or to the local base station apparatuses, a first control signal that can indicate that a second measurement signal, which is different from a first measurement signal that is used between the macro base station apparatus and the mobile terminal apparatus, is transmitted.

6. The macro base station apparatus according to claim 5, wherein the macro base station apparatus transmits, to the local base station apparatuses, a second control signal that can indicate that the first measurement signal is transmitted or that the second measurement signal is transmitted.

7. A mobile terminal apparatus that communicates with a macro base station apparatus forming a macro cell, using a radio communication scheme for the macro cell, and that communicates with a plurality of local base station apparatuses that are connected with the macro base station apparatus via a communication link and that form small cells in the macro cell, using a radio communication scheme for the small cells, the mobile terminal apparatus comprising:
a receiving section that receives a first control signal that can indicate that a second measurement signal, which is different from a first measurement signal that is used between the macro base station apparatus and the mobile terminal apparatus, is transmitted, and the second measurement signal;
a measurement section that acquires a measurement result by conducting a measurement using the second measurement signal; and
a transmission section that transmits the measurement result to the macro base station apparatus or to the local base station apparatuses.

8. The mobile terminal apparatus according to claim 7, wherein:
the receiving section receives the first measurement signal;
the measurement section acquires a measurement result by conducting a measurement using the first measurement signal; and
the transmission section transmits the measurement result of the measurement using the first measurement signal and the measurement result of the measurement using the second measurement signal to the macro base station apparatus or to the local base station apparatuses.

9. The mobile terminal apparatus according to claim 8, wherein, between the measurement result of the measurement using the first measurement signal and the measurement result of the measurement using the second measurement signal, the measurement result of higher quality is transmitted.

10. A communication method in a communication system comprising a macro base station apparatus that forms a macro cell, a plurality of local base station apparatuses that are connected with the macro base station apparatus via a communication link and that form small cells in the macro cell, and a mobile terminal apparatus that can communicate with the macro base station apparatus using a radio communication scheme for the macro cell, and that can communicate with each local base station apparatus using a radio communication scheme for the small cells, the communication method comprising the steps of:
in the macro base station apparatus:
transmitting, to the mobile terminal apparatus, a first control signal that can indicate that a second measurement signal, which is different from a first measurement signal that is used between the macro base station apparatus and the mobile terminal apparatus, is transmitted; and
in the mobile terminal apparatus:
receiving the first control signal and the second measurement signal;
acquiring a measurement result by conducting a measurement using the second measurement signal; and
transmitting the measurement result to the macro base station apparatus or to the local base station apparatuses.
